# EUROPÄISCHE PATENTSCHRIFT

(11) **EP 1 789 900 B1**
(45) Veröffentlichungstag und Bekanntmachung des Hinweises auf die Patenterteilung: **21.07.2010**
(21) Anmeldenummer: 05782939.2
(22) Anmeldetag: 13.09.2005
(51) Int. Cl.: G06F 21/00

(54) **VERFAHREN ZUR DOKUMENTATION EINES EIGENTUMS BZW. BESITZES SOWIE DES ÜBERGANGES DESSELBEN AN EINER WARE**
METHOD FOR DOCUMENTING PROPERTY OR POSSESSION AND TRANSFER OF PROPERTY OR POSSESSION OF A MERCHANDISE
PROCEDE POUR DOCUMENTER UNE PROPRIETE OU POSSESSION, ET TRANSFERT DE LA PROPRIETE D'UNE MARCHANDISE

(30) Priorität: 14.09.2004 DE 102004044892
(43) Veröffentlichungstag der Anmeldung: 30.05.2007
(73) Patentinhaber: ThoughtFab Limited, Birmingham West Midlands B18 6EW (GB)
(72) Erfinder: Dr. MICHELSEN, Dirk, 20144 Hamburg (DE)
(74) Vertreter: von Eichel-Streiber, Caspar
(86) Internationale Anmeldenummer: PCT/EP2005/009834
(87) Internationale Veröffentlichungsnummer: WO 2006/029820

(56) Entgegenhaltungen:
- WO-A-99/37053
- DE-A1- 10 210 765
- FR-A- 2 747 813
- US-A- 3 906 447
- US-A- 4 837 822
- US-B1- 6 539 480
- PATENT ABSTRACTS OF JAPAN Bd. 2003, Nr. 07, 3. Juli 2003 (2003-07-03) & JP 2003 091240 A (DAINIPPON PRINTING CO LTD), 28. März 2003 (2003-03-28)

## Beschreibung

Die Erfindung betrifft ein Verfahren zur Dokumentation eines Eigentums bzw. Besitzes sowie des Überganges desselben an einer Ware.

Im modernen Warenverkehr wird vermehrt Wert darauf gelegt, die Historie einer Ware in elektronischer Form an der Ware selbst zu vermerken. Zu diesem Zweck ist es bekannt, Funkspeicher, sogenannte RFID-Tags (Radio Frequency ID-Tags), an den Waren anzubringen.

Bei einem bekannten Verfahren zur Kennzeichnung der Waren werden auf den RFID-Tags einmalig die Waren betreffende Daten (z.B. Art der Waren, Artikelnummer, Hersteller etc.) hinterlegt. Diese Daten können dann von den Händlern an unterschiedlichen Positionen in der Handelskette ausgelesen und in deren jeweiligem Warenwirtschaftssystem verarbeitet werden. Bei diesem System werden die RFID-Tags einmalig beschrieben und können insbesondere nicht einem Eigentums- bzw. Besitznachweis bzw. der Abwicklung eines Überganges an dem Eigentum bzw. Besitz dienen. Ein solches System wird in der DE 10210765 A1 offenbart.

Ein anderes bekanntes Verfahren nutzt die RFID-Tags in geschlossenen Benutzergruppen, wobei diese von den Teilnehmern der Benutzergruppe nicht nur ausgelesen, sondern zumindest von ausgesuchten Teilnehmern auch beschrieben werden können. Um einen Zugriff auf die auf den RFID-Tags gespeicherten Daten durch unberechtigte Dritte zu verhindern, werden bei diesem Verfahren kryptographische Techniken eingesetzt. Dabei halten ein, einige oder alle Teilnehmer der geschlossenen Benutzergruppe einen Schlüssel, der sie zum Auslesen bzw. Beschreiben der RFID-Tags berechtigt.

Bei diesem Verfahren ist eine eindeutige Eigentums- oder Besitzzuordnung nicht vorgesehen, und es kann insbesondere ein auf dem RFID-Tag verzeichneter, für alle Beteiligten sicherer Übergang an dem Eigentum bzw. Besitz nicht vollzogen werden.

Es ist aus der US 6,539,480 ebenfalls bekannt, den Zugriff auf die Verwaltung eines Computers durch asymmetrische Schlüssel zu sichern. Dabei wird ein öffentlicher Schlüssel in einem Speicher abgelegt. Dieser Schlüssel kann durch Berechtigte Mithilfe des passenden privaten Schlüssels ausgetauscht werden. Dadurch kann die Berechtigung zur Verwaltung des Computer übergeben werden.

Ausgehend von den bekannten Verfahren bzw. Systemen ist es Aufgabe der Erfindung, ein Verfahren bereitzustellen, bei dem unter Einsatz eines an einer Ware angeordneten RFID-Tags ein Eigentums- bzw. Besitzübergang eindeutig verzeichnet werden kann und bei dem nur der jeweils aktuelle Eigentümer bzw. Besitzer und gegebenenfalls noch eine unabhängige Kontrollinstanz Zugriff auf die über den RFID-Tag abrufbaren Informationen hat.

Zur Lösung dieser Aufgabe wird mit der Erfindung ein Verfahren mit den Merkmalen des Anspruchs 1 vorgeschlagen. Vorteilhafte Ausgestaltungen bzw. Weiterbildungen des Verfahrens sind in den abhängigen Ansprüchen 2 bis 6 spezifiziert.

Die Grundidee der Erfindung liegt in dem Einsatz der an sich bekannten Verschlüsselung mit Hilfe von Schlüsselpaaren. Jeder Teilnehmer an diesem System hält ein individuelles und einzigartiges Paar digitaler Schlüssel, jeweils einen ersten digitalen Schlüssel, den sogenannten Public Key, und einen zweiten digitalen Schlüssel, den sogenannten Private Key. Der erste digitale Schlüssel ist "für die Öffentlichkeit bestimmt", d.h. er wird von dem Inhaber des Schlüsselpaares frei herausgegeben. Den zweiten digitalen Schlüssel hält der Teilnehmer geheim. Mit Hilfe eines dieser Schlüssel können Daten nun derart verschlüsselt werden, dass nur mit Hilfe des jeweils anderen Schlüssels ein Zugriff auf die Daten erfolgen kann. Dieses Prinzip des Public Key und des Private Key wird bspw. bei der Verschlüsselung von E-Mails im elektronischen Schriftverkehr eingesetzt. Als "Schlüssel" im Sinne der Erfindung sind dabei sowohl ein Schlüssel zum Verschlüsseln eines Kommandos (mit dem zweiten digitalen Schlüssel), welches nur nach Entschlüsseln (mit dem ersten digitalen Schlüssel) verstanden wird, als auch eine einem Kommando vorangestellte Signatur zu verstehen, die dem Kommandoempfänger zu erkennen gibt, dass die Kommandos von einer berechtigten Person stammen.

Die Erfindung macht sich dieses Prinzip zunutze, indem im Speichermedium eines RFID-Tags der erste digitale Schlüssel des aktuellen Eigentümers bzw. Besitzers der Ware hinterlegt ist, und somit nur diese Person (bzw. Einrichtung) mit Hilfe ihres individuellen zweiten digitalen Schlüssels Zugriff auf das Speichermedium des RFID-Tags hat. Dieser Zugriff kann gegebenenfalls durch eine entsprechende Programmierung des Speichermediums hinsichtlich des Auslesens und/oder des Beschreibens des Speichermediums beschränkt sein. Soll ein Eigentums- bzw. Besitzübergang an der Ware stattfinden, verkauft ein Großhändler bspw. die Ware an einen Supermarkt, übergibt der Erwerber seinen ersten digitalen Schlüssel an den Veräußerer. Dies kann er bspw. mittels einer Smart-Card oder eines anderen Speichermediums tun. Der Veräußerer nutzt dann seinen zweiten digitalen Schlüssel, um den ersten digitalen Schlüssel des Erwerbers auf das Speichermedium des RFID-Tags zu schreiben. Dabei ist das RFID-Tag programmtechnisch so eingerichtet, dass der erste digitale Schlüssel des Veräußerers mit dem ersten digitalen Schlüssel des Erwerbers im Speichermedium des RFID-Tags überschrieben wird. Auf diese Weise verliert der Veräußerer die Möglichkeit des Zugriffs auf das Speichermedium des RFID-Tags und dokumentiert so seinen Verlust an dem Eigentum bzw. Besitz der Waren.

Dadurch, dass nun der erste digitale Schlüssel des Erwerbers auf dem Speichermedium des RFID-TAGs gespeichert ist, erhält dieser bei Einsatz seines zweiten digitalen Schlüssels - ggf. eingeschränkten - Zugriff auf das Speichermedium des RFID-Tags und kann sich so als Eigentümer bzw. Besitzer der Ware ausweisen.

In einer Weiterbildung der Erfindung ist es möglich, dass das RFID-Tag den Vollzug des Eigentums- bzw. Bestitzüberganges quittiert. Dies kann z. B. durch Ausgabe eines akustischen oder optischen Signals erfolgen, aber auch durch Absetzen einer entsprechenden elektronischen Quittungsnachricht.

Eine "Ware" im Sinne der Erfindung kann auch ein Gebinde von Einzelwaren, z.B. eine Palette mit Waschmittelpaketen, sein, wobei in diesem Fall das Speichermedium an dem Gebinde, also z.B. an der Palette, angebracht wird.

Hält ein dem ersten Erwerber nachfolgender weiterer Erwerber in einer Erwerberkette kein eigenes digitales Schlüsselpaar (z. B. im Falle eines die Ware erwerbenden Endverbrauchers), besteht bei dem erfindungsgemäßen Verfahren die Möglichkeit, dass der Veräußerer einen gesonderten ersten digitalen Schlüssel auf das Speichermedium des RFID-Tags aufbringt, zu dem er keinen passenden zweiten digitalen Schlüssel besitzt und der das Speichermedium deaktiviert. Auf diese Weise verliert der Veräußerer das Eigentum bzw. den Besitz an der Ware eindeutig, der Erwerber ist allerdings nicht als Eigentümer bzw. Besitzer eindeutig registriert, sondern es ist lediglich festzustellen, dass die Ware auf einen Erwerber übergegangen ist, der über kein individuelles Schlüsselpaar verfügt.

Dabei kann für den Fall eines nicht vorhandenen eigenen individuellen Schlüsselpaares beim weiteren Erwerber der bei Übergabe der Ware auf das Speichermedium aufgebrachte erste digitale Schlüssel der erste digitale Schlüssel (Public Key) eines von dem Hersteller des RFID-Tags und/oder einer unabhängigen, vorzugsweise öffentlichen, Institution gehaltenen individuellen Schlüsselpaares sein, so dass der Hersteller des RFID-Tags bzw. die unabhängige Institution in der Lage ist, durch Zuhilfenahme seines zweiten digitalen Schlüssels den letzten Besitz- bzw. Eigentumsübergang zu bestätigen und das Speichermedium des RFID-Tags wieder zu aktivieren und gegebenenfalls einer neuen Verwendung zuzuführen.

Auf dem Speichermedium des RFID-Tags können neben dem ersten digitalen Schlüssel des jeweiligen Besitzers bzw. dem gesonderten digitalen Schlüssel gemäß einer vorteilhaften Weiterbildung der Erfindung zusätzlich warenbezogene Daten gespeichert sein. Die Waren sind dann vorzugsweise in einem strukturieren Format, wie z.B. XML, auf dem Speichermedium gespeichert. Solche Daten sind z. B. Art der Ware, Artikelnummer, Herstellungsort, Herstellungszeit, gegebenenfalls Haltbarkeitsdatum oder ähnliches. Auf diese Weise kann der RFID-Tag heute häufig noch in Papierform gebräuchliche Waren- bzw. Frachtunterlagen ersetzen. Auch können die einzelnen Eigentümer bzw. Besitzer jeweils zusätzliche Daten auf dem Speichermedium ablegen. So kann z. B. ein Spediteur, der die Ware zum Transport in Besitz nimmt, Daten wie Übernahmezeitpunkt und Frachtweg auf dem Speichermedium des RFID-Tags sichern. Das Speichermedium des RFID-Tags kann so die gesamte Historie der Ware in digitaler Form gespeichert enthalten. Auch können nach einer weiteren vorteilhaften Weiterbildung Daten über die Besitzer bzw. Eigentümer sowie ggf. über deren Reihenfolge gespeichert werden. Auf diese Weise ist auch hinsichtlich der Besitzer bzw. Eigentümer die Historie der Ware auf dem Speichermedium des RFID-Tags gesichert.

In einer weiteren vorteilhaften Weiterbildung der Erfindung ist vorgesehen, dass über einen zusätzlich auf dem Speichermedium des RFID-Tags abgelegten und nicht überschreibbaren ersten digitalen Schlüssel und einen zweiten, nur einer Kontrollstelle bekannten digitalen Schlüssel, die Kontrollstelle immer Zugriff auf die Daten auf dem Speichermedium des RFID-Tags hat. So kann z. B. der Zoll eine solche Kontrollstelle sein, dem es möglich sein muss, die Daten aus dem Speichermedium des RFID-Tags auszulesen. Auch ist es möglich, die Polizei mit dem zweiten digitalen Schlüssel auszurüsten, damit diese bei entwendeten Waren durch Auslesen der auf dem Speichermedium des RFID-Tags gespeicherten Daten den wahren Besitzer bzw. Eigentümer ermitteln kann.

Erfindungsgemäß wird zur Kommunikation mit dem Speichermedium RFID-Technologie verwendet. Das Speichermedium ist somit Teil eines RFID-Tags. RFID-Tags haben den Vorteil, dass sie ohne eigene Energieversorgung auskommen. Sie werden zudem im Warenverkehr bereits vielfach verwendet, so dass die entsprechenden Geräte zum Auslesen bei vielen Händlern schon vorhanden sind und somit nicht mehr nachgerüstet werden müssen.

Mit der Erfindung wird zudem ein RFID-Tag mit elektronischem Speichermedium angegeben, welches zum Anbringen an einer Ware sowie zur Durchführung eines erfindungsgemäßen Verfahrens eingerichtet ist. Die Speichermedien werden für das erfindungsgemäße Verfahren vom Hersteller der RFID-Tags typischerweise entweder zunächst mit dem ersten digitalen Schlüssel des Herstellers des RFID-Tags oder mit dem ersten digitalen Schlüssel des Herstellers der Waren versehen oder aber gleich mit dem ersten digitalen Schlüssel des ersten, die Waren vom Hersteller beziehenden Händlers. Bei der Programmierung des RFID-Tags wird das oben beschriebene Protokoll des Besitzer- bzw. Eigentümerwechsels bereits angelegt. D.h. es wird auf dem Speichermedium ein Pfad zur Ablage des ersten digitalen Schlüssels angelegt und das RFID-Tag so eingerichtet, dass bei Aufbringen eines neuen ersten digitalen Schlüssels der zuvor vorhandene erste digitale Schlüssel unter diesem Pfad überschrieben wird.

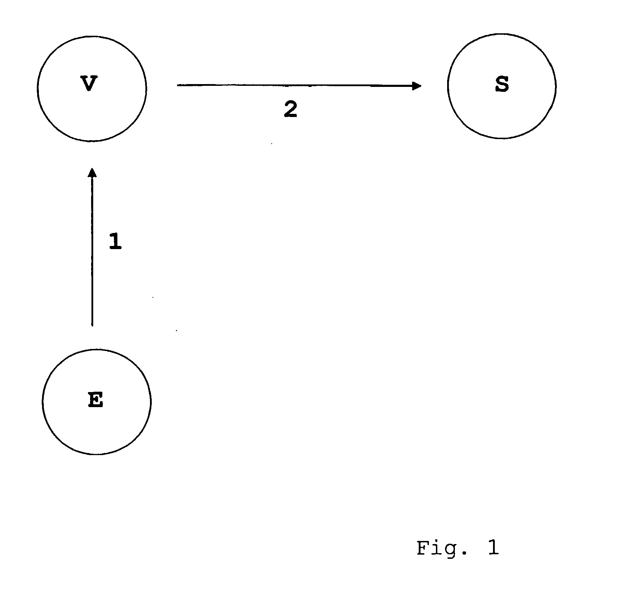

In Fig. 1 ist vereinfacht und schematisch das Protokoll des Eigentums- bzw. Besitzübertrages an der Ware dargestellt, wobei hier der neue Besitzer bzw. Eigentümer über ein eigenes digitalen Schlüsselpaar verfügt.

Ein Erwerber E, der das Eigentum bzw. den Besitz an der Ware erwerben möchte, übergibt dem bisherigen Eigentümer bzw. Besitzer, dem Veräußerer V zunächst seinen ersten digitalen Schlüssel (Public Key). Dies ist durch den mit 1 bezeichneten Pfeil angedeutet. Der Veräußerer V überschreibt unter Verwendung seines eigenen zweiten digitalen Schlüssels (Private Key) seinen ersten digitalen Schlüssel (Public Key) auf dem Speichermedium S des RFID-Tags mit dem ersten digitalen Schlüssel des Veräußerers V. Damit ist bereits der Besitz- bzw. Eigentumsübergang vollständig und sicher vollzogen. Der Veräußerer V verliert durch das Überschreiben seines ersten digitalen Schlüssels die Zugriffsrechte und -möglichkeit auf das Speichermedium S. Der Erwerber E hat, dadurch dass sein erster digitaler Schlüssel nun auf dem Speichermedium S des RFID-Tags gespeichert ist, unter Verwendung seines passenden zweiten digitalen Schlüssels die Zugriffsmöglichkeit auf das Speichermedium S des RFID-Tags erlangt.

Das Verfahren erlaubt die belegbare Nachverfolgung des Eigentums bzw. Besitzes an Waren in einer offenen Benutzergruppe. Jeder Teilnehmer bringt sein eigenes, individuelles digitales Schlüsselpaar aus erstem digitalen Schlüssel (Public Key) und zweitem digitalen Schlüssel (Private Key) ein. Diese Schlüsselpaare werden nicht zentral vergeben oder verwaltet, sondern können von jedem Teilnehmer, ggf. im Rahmen bestimmter, technisch bedingter Vorgaben, z. B. unter Verwendung einer sogenannten Passphrase, selbst erzeugt werden. Auch Teilnehmer ohne eigenes digitales Schlüsselpaar, können an diesem System teilhaben, indem für ihren Erwerb der Ware der gesonderte erste digitale Schlüssel eingesetzt wird.

## Patentansprüche

1. Verfahren zur Dokumentation eines Eigentums bzw. Besitzes sowie des Überganges desselben an einer Ware, wobei die Ware mit einem RFID-Tag mit überschreibbarem, elektronischem Speichermedium (S) versehen und auf dem Speichermedium (S) ein erster digitaler Schlüssel (Public Key) eines individuellen Schlüsselpaares, bestehend aus dem ersten digitalen Schlüssel und einem zweiten digitalen Schlüssel (Private Key) eines ersten Eigentümers bzw. Besitzers (V) der Ware, hinterlegt wird, wobei durch Verwendung des zweiten Schlüssels der erste Besitzer (V), gegebenenfalls eingeschränkten, Lese- sowie Schreibzugriff auf den Speicher hat, wobei bei einer Übertragung des Eigentums bzw. Besitzes an der Ware von dem ersten Eigentümer bzw. Besitzer (V) auf einen zweiten Eigentümer bzw. Besitzer (E) letzterer dem ersten Eigentümer bzw. Besitzer (V) einen ersten digitalen Schlüssel (Public Key) seines individuellen, aus dem ersten digitalen Schlüssel (Public Key) und einem zweiten digitalen Schlüssel (Private Key) bestehenden Schlüsselpaares übergibt (1) und der erste Eigentümer bzw. Besitzer (V) zum Vollzug des Eigentums- bzw. Besitzüberganges an der Ware unter Verwendung seines zweiten digitalen Schlüssels seinen auf dem Speichermedium (S) gespeicherten ersten digitalen Schlüssel mit dem ersten digitalen Schlüssel des zweiten Eigentümers bzw. Besitzers (E) überschreibt (2), wodurch der zweite Eigentümer bzw. Besitzer (E) bei Verwendung des zweiten digitalen Schlüssels seines individuellen Schlüsselpaares, gegebenenfalls eingeschränkten, Lese- sowie Schreibzugriff auf den Speicher erhält.

2. Verfahren nach Anspruch 1, **dadurch gekennzeichnet, dass** bei einer weiteren Übertragung des Besitzes bzw. Eigentums an der Ware von dem zweiten Besitzer bzw. Eigentümer (V) an einen dritten Besitzer bzw. Eigentümer (E) der zweite Eigentümer bzw. Besitzer (V) unter Verwendung seines zweiten digitalen Schlüssels seinen ersten digitalen Schlüssel auf dem Speichermedium mit einem gesonderten ersten digitalen Schlüssel (Public Key) überschreibt und das Speichermedium so für ein weiteres Beschreiben bzw. Auslesen durch den dritten Eigentümer bzw. Besitzer (E) deaktiviert.

3. Verfahren nach Anspruch 2, **dadurch gekennzeichnet, dass** der gesonderte erste digitale Schlüssel der erste digitale Schlüssel eines aus dem ersten digitalen Schlüssel (Public Key) und einem zweiten digitalen Schlüssel (Private Key) bestehenden, individuellen Schlüsselpaares des Herstellers des Speichermediums und/oder einer unabhängigen, vorzugsweise öffentlichen, Institution ist, wobei der Hersteller des Speichermediums bzw. die unabhängige Institution das Speichermedium unter Verwendung seines bzw. ihres zweiten digitalen Schlüssels wieder reaktivieren kann und dann Schreib- und Lesezugriff auf das Speichermedium hat.

4. Verfahren nach einem der vorhergehenden Ansprüche, **dadurch gekennzeichnet, dass** auf dem Speichermedium warenbezogene Daten, wie Art der Ware, Produktionszeitpunkt, Artikelnummer oder dergleichen, vorzugsweise in strukturierter Form, wie z.B. in XML, gespeichert werden.

5. Verfahren nach einem der vorhergehenden Ansprüche, **dadurch gekennzeichnet, dass** auf dem Speichermedium Daten über die Besitzer bzw. Eigentümer und gegebenenfalls über die Reihenfolge derselben gespeichert werden.

6. Verfahren nach einem der vorhergehenden Ansprüche, **dadurch gekennzeichnet, dass** auf dem Speichermedium ein weiterer, nicht zum Überschreiben vorgesehener erster digitaler Schlüssel (Public Key) eines einer Kontrollstelle zuzurechnenden, aus dem ersten digitalen Schlüssel und einem zweiten digitalen Schlüssel (Private Key) bestehenden Schlüsselpaares hinterlegt wird, wobei die Kontrollstelle unter Anwendung ihres zweiten digitalen Schlüssels zumindest einen Lesezugriff auf das Speichermedium erlangt.

7. RFID-Tag mit elektronischem Speichermedium (S), **dadurch gekennzeichnet, dass** er zur Anbringung an einer Ware und zur Durchführung eines Verfahrens nach einem der Ansprüche 1 - 6 eingerichtet ist.

## Claims

1. A method for documenting a property or possession as well as the transfer thereof relating to an article, the article being provided with an RFID tag with overwritable, electronic storage medium (S) and whereas on the storage medium (S) a first digital key (Public Key) of an individual pair of keys is arranged, comprising the first digital key and a second digital key (Private Key) of a first proprietor or owner (V) of the article, wherein the first owner (V) has, possibly restricted, reading and writing access to the memory by using the second key, wherein during transfer of the property or possession of the article from the first proprietor or owner (V) to a second proprietor or owner (E) finally the first proprietor or owner (V) transfers (1) a first digital key (Public Key) of his individual pair of keys, comprising the first digital key (Public key) and a second digital key (Private Key) of a first proprietor or owner (V) of the article, and the first proprietor or owner (V), for actuating the transfer of propriety or possession of the article, overwrites (2), by using his second digital key, his first digital key stored on the storage medium (S) with the first digital key of the second proprietor or owner (E), wherein the second proprietor or owner (E) is granted, possibly restricted, reading and writing access to the memory by using the second digital key of his individual pair of keys.

2. A method according to claim 1, **characterised in that**, in case of another transfer of the possession or property of the article from the second owner or proprietor (V) to a third owner or proprietor (E) the second proprietor or owner (V) overwrites (2),by using his second digital key, his first digital key stored on the storage medium with a separate first digital key (Public Key) and deactivates the storage medium for further writing or reading for the third proprietor or owner (E).

3. A method according to claim 2, **characterised in that** the separate first digital key is the first digital key of an individual pair of keys, comprising the first digital key (Public key) and a second digital key (Private Key) of the manufacturer of the storage medium and/or of an independent, preferably public, institution, wherein the manufacturer of the storage medium or the independent institution can reactivate the storage medium by using his second digital key and then be granted writing and reading access to the storage medium.

4. A method according to any of the preceding claims, **characterised in that** article-related data may be recorded on the storage medium such as the type of product, the date of manufacture, the article number and similar, preferably in a structured fashion, such for instance XML format.

5. A method according to any of the preceding claims, **characterised in that** data on the owners or proprietors and possibly their sequence are recorded on the storage medium.

6. A method according to any of the preceding claims, **characterised in that** on the storage medium another first digital key (Public Key), not intended for overwriting of an individual pair of keys is arranged for submission to a control station, said pair of keys comprising the first digital key and a second digital key (Private Key), wherein the control station is granted at least a reading access to the storage medium by using its second digital key.

7. An RFID tag with electronic storage medium (S), **characterised in that** it is provided for attachment to an article and for implementation of a method according to any of the claims 1 - 6 .

## Revendications

1. Procédé de documentation d'une propriété ou possession de même que le transfert de celle-ci sur une marchandise, la marchandise étant pourvue d'une étiquette RFID avec moyen de stockage (S) électronique écrasable et sur le moyen de stockage `S) se trouve une première clé numérique (Public Key) appartenant à une paire de clés individuelle, composée de la première clé numérique et d'une deuxième clé numérique (Private Key) d'un premier propriétaire ou possesseur (V) de la marchandise, le premier possesseur (V) ayant un accès, restreint le cas échéant, pour lecture et écriture à la mémoire en utilisant la deuxième clé, en cas de transfert de propriété ou de possession de la marchandise du premier propriétaire ou possesseur (V) vers un deuxième propriétaire ou possesseur (E) finalement le premier propriétaire ou possesseur (V) remet (1) une première clé numérique (Public Key) appartenant à sa paire de clés composée de la première clé numérique (Public Key) et d'une deuxième clé numérique (Private Key) et le premier propriétaire ou possesseur (V) , pour réaliser le transfert de propriété ou de possession de la marchandise, écrase (2) à l'aide de sa deuxième clé numérique sa première clé numérique en mémoire sur le moyen de stockage (S) avec la première clé numérique du deuxième propriétaire ou possesseur (E) et le deuxième propriétaire ou possesseur (E) utilise la deuxième clé numérique de sa paire de clés individuelle pour bénéficier d'un accès, le cas échéant restreint, pour lecture et écriture à la mémoire.

2. Procédé selon la revendication 1, **caractérisé en ce qu'**en cas d'autre transfert de la possession ou propriété de la marchandise d'un deuxième possesseur ou propriétaire (V) vers un troisième possesseur ou propriétaire (E), le deuxième propriétaire ou possesseur (V) utilise sa deuxième clé numérique pour écraser sa première clé numérique sur le moyen de stockage avec une première clé numérique (Public Key) séparée et désactive le moyen de stockage pour toute autre écriture ou lecture par le troisième propriétaire ou possesseur.

3. Procédé selon la revendication 2 **caractérisé en ce que** la première clé numérique séparée est la première clé numérique d'une paire de clés individuelle du fabricant du moyen de stockage et/ou d'une institution indépendante, de préférence publique, composée de la première clé numérique (Public Key) et d'une deuxième clé numérique (Private Key), le fabricant du moyen de stockage ou l'institution indépendante peut réactiver le moyen de stockage à l'aide sa deuxième clé numérique et bénéficie alors d'un accès pour écriture et lecture au moyen de stockage.

4. Procédé selon l'une quelconque des revendications précédentes, **caractérisé en ce que** des données se rapportant aux marchandises, comme le type de marchandise, la date de fabrication, le numéro de référence ou autre, sont enregistrées sur le moyen de stockage, de préférence de manière structurée, par exemple en format XML.

5. Procédé selon l'une quelconque des revendications précédentes, **caractérisé en ce que** des données concernant les possesseurs ou propriétaires et le cas échéant leur séquence sont enregistrées sur le moyen de stockage.

6. Procédé selon l'une quelconque des revendications précédentes, **caractérisé en ce que** le moyen de stockage comporte une autre première clé numérique (Public Key) non prévue pour écrasement appartenant à une paire de clés à soumettre à un poste de contrôle, paire composée de la première clé numérique et d'une deuxième clé numérique (Private Key), la poste de contrôle bénéficiant au moins d'un accès pour lecture au moyen de stockage en utilisant sa deuxième clé numérique.

7. Etiquette RFID avec moyen de stockage électronique (S), **caractérisée en ce qu'**elle peut être appliquée sur une marchandise et mettre en oeuvre le procédé selon l'une quelconque des revendications 1 - 6 .
